(19) **Europäisches Patentamt**

**European Patent Office**

**Office européen des brevets**

(11) **EP 1 072 350 A1**

(12) **EUROPÄISCHE PATENTANMELDUNG**

(43) Veröffentlichungstag:
**31.01.2001 Patentblatt 2001/05**

(51) Int. Cl.⁷: **B23K 26/06**

(21) Anmeldenummer: **99810623.1**

(22) Anmeldetag: **12.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder:
**MDC Max Dätwyler AG Bleienbach
3368 Bleienbach (CH)**

(72) Erfinder:
• **Dätwyler, Max
3368 Bleienbach (CH)**

• **Hennig, Guido, Dr.
4923 Wynau (CH)**

(74) Vertreter:
**Roshardt, Werner Alfred, Dipl.-Phys.
Keller & Partner
Patentanwälte AG
Schmiedenplatz 5
Postfach
3000 Bern 7 (CH)**

(54) **Verfahren zur Erzeugung einer Intensitätsverteilung über einen Arbeitslaserstrahl sowie Vorrichtung hierzu**

(57) Bei dem Verfahren zur Erzeugung einer vorgegebenen Intensitätsverteilung eines Arbeitslaserstrahls (17) auf einer Objektoberfläche wird wenigstens ein erster und ein zweiter Teilstrahl (3a,3a'',3b,3b',3b'') mit jeweils einer vorgegebenen ersten und zweiten Intensitätsverteilung (35,37) gebildet und die Leistung jedes Teilstrahls (3a,3a'',3b,3b',3b'') mit Schaltzeiten bis zu Submikrosekunden gesteuert verändert. Die Teilstrahlen (3a,3a'',3b,3b',3b'') werden dann zu einer dritten Intensitätsverteilung (39) überlagert als Arbeitsstrahl (17) auf bzw. in das Objekt hinein gerichtet, um eine unterschiedliche Wirkung infolge einer variierten dritten Intensitätsverteilung (39) des Arbeitsstrahls (17) zu erreichen. Im Gegensatz zu herkömmlichen Verfahren unterscheidet sich nun eine erste Intensitätsverteilung $I_b = a \cdot f_b(x,y,t)$ von einer nachfolgenden $I_n = a \cdot f_n(x,y,t)$ durch den Funktionswert $f_u(x,y,t)$ und nicht mehr durch einen geänderten linearen Wert a. Das erfindungsgemäße Verfahren läßt sich bevorzugt bei der Herstellung der Rasternäpfchen auf einem Tiefdruckzylinder verwenden.

Fig. 2

## Beschreibung

Die Erfindung betrifft ein Verfahren gemäß dem Oberbegriff des Patentanspruchs 1 sowie eine Vorrichtung gemäß dem Oberbegriff des Patentanspruchs 6.

## Stand der Technik

Die Intensitätsverteilung eines Materialbearbeitungslaserstrahls auf einer Werkzeugoberfläche wurde bislang mit Fokussierlinsen unterschiedlicher Brennweite eingestellt. Die Abbildung von Laserstrahlen läßt sich mit der Gaußschen Strahlentheorie beschreiben. Vereinfacht kann hier gesagt werden: Je breiter ein auf eine Fokussierlinse treffender kollimierter Laserstrahl ist, desto kleiner ist sein Fokusdurchmesser und desto kürzer ist seine Fokussiertiefe. Die Intensitätsverteilung auf einer zu bearbeitenden Werkzeugoberfläche wurde somit bisher durch eine geeignete Auswahl einer Fokussierlinse mit einer entsprechenden vorgängigen Strahlaufweitung eingestellt.

Durch eine geeignete Wahl von sog. Modenblendan am "richtigen" Ort im Laserresonator wurde zudem der erzeugte Lasermode verändert. Eine Modenblende mit einem kleinen Querschnitt ergab einen Grundmode, während Modenblenden mit einer großen Öffnung einen breiten Multimodestrahl ergaben.

Wurden hohe Leistungen verwendet, wurden Laserstrahlen mehrerer Laser koaxial übereinanderliegend zusammengeführt. Eine Änderung der Intensitätsverteilung auf einer zu bearbeitenden Werkzeugoberfläche konnte somit nur durch Änderungen im optischen Aufbau vorgenommen werden. Sollte eine schnelle Intensitätsänderung vorgenommen werden, so konnte unter Verwendung optischer Schaltelemente wie Pockelszelle (elektro-optischer Effekt), Faraday-Rotator (magneto-optischer Effekt) oder durch akusto-optische Modulatore nur die gesamte eingestrahlte Leistung verändert werden. Hierbei erfolgte jedoch nur eine Dämpfung über den gesamten Strahlquerschnitt. Die relative Intensitätsverteilung über den fokussierten Strahlquerschnitt blieb somit, abgesehen von Beugungseffekten und räumlichen Verzerrungen, erhalten. Die Intensitätsverteilung bestand aus einem numerischen Faktor und einer Ortsfunktion $[I = a \cdot f(x,y)]$ , wobei bei den bekannten Verfahren nur der numerische Faktor $[a]$ änderbar war.

## Aufgabe der Erfindung

Aufgabe der Erfindung ist es, ein Verfahren sowie eine Vorrichtung zu schaffen, mit dem bzw. mit der die Kurvenform einer Intensitätsverteilung eines Laserstrahls am Bearbeitungsort schnell, d.h. mit Schaltzeiten bis zu Submikrosekunden, änderbar ist. Eine Veränderung der Kurvenform der Intensitätsverteilung ist lediglich durch eine Dämpfung des gesamten Materialbearbeitungstrahles nicht erreichbar; dies würde nämlich wieder bis auf Beugungseffekte und Verzerrungen die gleiche Kurvenform ergeben. Aufgabe der Erfindung ist es, bei der Intensitätsverteilung nicht mehr nur den numerischen Faktor, sondern auch den Funktionswert zu ändern:

$$I_1 = a \cdot f_1(x,y,t); \ I_2 = a \cdot f_2(x,y,t); \ ....$$

Selbstverständlich kann auch der lineare Faktor a zusätzlich variiert werden.

## Lösung der Aufgabe

Die Lösung der Aufgabe erfolgt dadurch, daß wenigstens zwei Teilstrahlen mit unterschiedlicher Intensitätsverteilung verwendet werden, welche zu einem Arbeitsstrahl zusammengeführt werden. Dieser Arbeitsstrahl wird dann zur Bearbeitung auf eine Objektoberfläche bevorzugt fokussiert gerichtet. Im Gegensatz zu herkömmlichen Verfahren unterscheidet sich nun eine erste Intensitätsverteilung $I_b = a \cdot f_b(x,y,t)$ von einer nachfolgenden $I_n = a \cdot f_n(x,y,t)$ durch den Funktionswert $f_u(x,y,t)$ und nicht mehr nur durch einen geänderten linearen Wert a. Unter x und y werden die Koordinaten einer Ebene, bevorzugt über den Strahlquerschnitt und unter t eine Zeitabhängigkeit verstanden.

Dadurch, daß die Intensität der Teilstrahlen einzeln verändert wird, erfolgt beim Zusammenführen der Strahlen nicht mehr eine lineare Änderung der Kurvenform der Intensitätsverteilung, sondern die Kurvenform als Ganzes ändert sich. Eine Änderung der Kurvenform ergibt, wie unten ausgeführt wird, beispielsweise ein unterschiedliches Bohrverhalten, je nachdem, ob die Intensität der Bearbeitungsstrahlmitte oder am Strahlrand erhöht wird.

Erfindungsgemäß werden mindestens zwei Teilstrahlen $I_1 = a_1 \cdot f_1(x,y,t)$ und $I_2 = a_2 (x,y,t)$ zusammengefügt, wobei mit Schaltzeiten (Veränderungszeiten) bis zu Submikrosekunden der Faktor a veränderbar ist. Die Zusammenfügung der beiden Strahlen $\Sigma I1 + I2$ ergibt dann einen Arbeitsstrahl mit einer anderen Funktion $f_3(x,y,t)$ der intensitätsverteilung über dem Strahlquerschnitt. Es läßt sich hierdurch der "Durchmesser" des Arbeitsstrahles "schnell" steuern.

Die Erfindung ist überall dort bevorzugt einzusetzen, wo Materialabtragungen benötigt werden, deren Tiefe und Breite sich räumlich schnell ändern. Ein bevorzugtes Anwendungsgebiet ist die Herstellung von Rasternäpfchen auf einem Tiefdruckzylinder. Eine Rasternäpfchenherstellung unter Verwendung von Laserstrahlung ist aus der WO96/34718 bekannt. Bei dem bekannten Verfahren wurde jedoch eine Intensitätsverteilung verwendet, wie sie durch die Fokussierung eines einzigen Strahles erreichbar ist. Die vorteilhafte, nahezu beliebig erzeugbare Intensitätsverteilung, wie sie die Erfindung durch eine Zusammenführung mehrere Strahlen erreicht, war der WO96/34718 unbekannt.

Mit der unten beschriebenen erfindungsgemäßen Vorrichtung können die Teilstrahlen zu unterschiedlichen Zeitpunkten ein- und ausgeschaltet bzw. teilweise ein- und ausgeschaltet werden. D.h. es ist nicht nur eine schnelle Intensitätsvariation der Intensitätsverteilung über den Strahlquerschnitt, sondern auch eine zeitliche Variation möglich: $\Sigma I1 + I2 + ....= \Sigma f_{a1}(t) \cdot f_1(x,y,t) + f_{a2}(t) \cdot f_2(x,y,t) + ....$  Diese Art der Variation wird man überall dort einsetzen, wo kurzzeitige Aufwärmungseffekte (z.B. Entstehen einer Plasmawolke) von Bedeutung sind.

Eine Materialabtragung ist für die Anwendung der Erfindung nicht zwingend; ein Einsatz kann auch bei einer nichtmaterialabtragenden Laserbeschriftung sowie beim Materialhärten erfolgen. Auch können Objekte ausgeleutet werden (z.B. moduliertes Pumpen von Laserkristallen oder Medien). Es kann mit gepulsten und auch mit kontinuierlich arbeitenden Laserstrahlen gearbeitet werden.

## Ausführungsbeispiele der Erfindung

Im folgenden werden Beispiele des erfindungsgemäßen Verfahrens und der erfindungsgemässen Vorrichtung anhand von Figuren näher erläutert. Weitere Vorteile der Erfindung ergeben sich aus dem nachfolgenden Beschreibungstext. Es zeigen:

Fig. 1    eine schematische Darstellung der erfindungsgemäßen Vorrichtung,

Fig. 2    eine beispielsweise Intensitätsverteilung zweier zusammengeführter koaxialer Teilstrahlen und

Fig. 3    analog zu **Figur 2** Intensitätsverteilungen zusammengeführter Teilstrahlen, welche in der Zusammenführungeinrichtung nicht parallel verlaufen und damit nach einer Fokussierung sich noch vollständig (a) bzw. nur teilweise (b) überlappen sowie vollständig voneinander distanziert (c) sind.

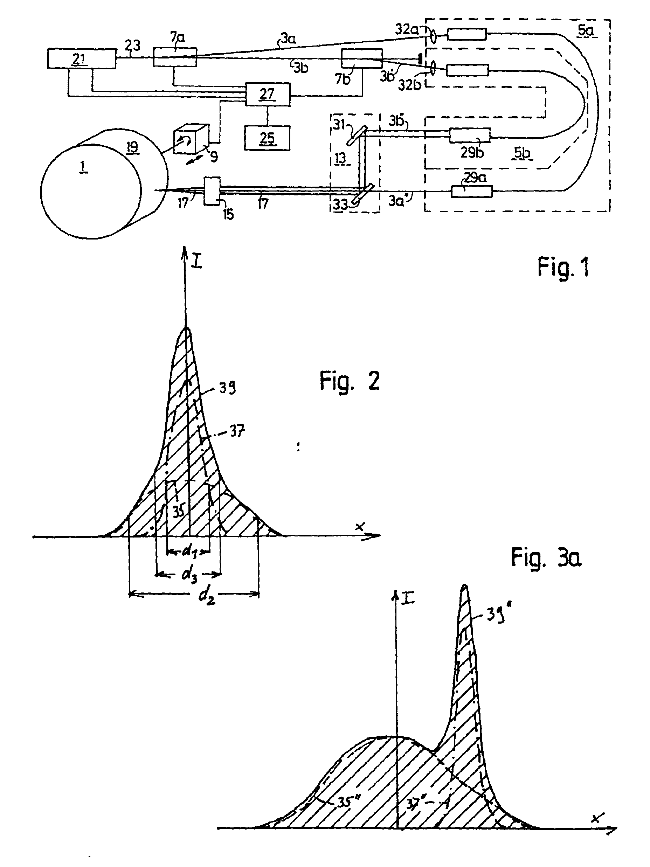

Die in **Figur 1** dargestellte erfindungsgemäße Vorrichtung wird hier beispielsweise zur Herstellung von Rasternäpfchen auf einem Tiefdruckzylinder **1** verwendet. In der Vorrichtung sind zwei Laserteilstrahlen **3a** und **3b** vorhanden, je eine Strahlprofilformungseinrichtung **5a** und **5b** für jeden Teilstrahl **3a** und **3b**, zwei Leistungseinstelleinrichtungen **7a** und **7b** für die Teilstrahlen **3a** und **3b**, eine Positioniereinrichtung **9** für ein zu bearbeitendes Werkstück **11**, nämlich den Tiefdruckzylinder, sowie eine Zusammenführungseinrichtung **13** für die beiden Teilstrahlen **3a** und **3b** und eine Fokussiereinrichtung **15** für die zum Materialbearbeitungsstrahl zusammengeführten Teilstrahlen **3a** und **3b**, um diese auf die zu bearbeitende Oberfläche **19** des Tiefdruckzylinders **1** zu fokussieren.

Ferner hat die Vorrichtung einen periodischen Q-switch Nd-YAG-Laser **21** als Strahlungsquelle. Der Laser **21** sendet einen Quellenstrahl **23** mit einer einstellbaren Repetitionsfrequenz von bis zu 70 kHz aus. Die Repetitionsfrequenz des periodischen Q-switch-Lasers **21** wird mit einem nicht dargestellten, innerhalb des Laserresonators angeordneten akusto-optischen Modulator erzeugt. Der akusto-optische Modulator innerhalb des Laserresonators, die zwei Leistungseinstelleinrichtungen **7a** und **7b**, die Positioniereinrichtung **9** und das nicht dargestellte Lasernetzgerät zum Laser **21** sind über Signalleitungen mit einer einen Speicher **25** aufweisenden Steuereinrichtung **27** elektrisch verbunden.

Der vorn Laser **21** ausgehende gepulste Laserstrahl **23** wird mit einer als akustooptischer Modulator **7a** ausgebildeten Leistungseinstelleinrichtung in die beiden Teilstrahlen **3a** und **3b** aufgeteilt. Je nach Amplitude der im Modulatorkristall angeregten akustischen Welle - es wird nur die Amplitude nicht aber die Frequenz verändert - wird die eingehende Strahlungsleistung zwischen den beiden Teilstrahlen **3a** und **3b** aufgeteilt. Eine Abstrahlung von Leistung in Teilstrahlen höherer Ordnung, d. h. unter größerem Winkel, kann vernachlässigt werden. Der Teilstrahl **3b** wird auf einen weiteren akusto-optischen Modulator **7b** als Leistungseinstelleinrichtung geführt. Von diesem Modulator wird jedoch nur ein einziger Teilstrahl **3b'** weitergeführt. D.h. die Leistung des Teilstrahls **3b'** wird gegenüber der eingekoppelten Leistung des Teilstrahls **3b** in Abhängigkeit des akustischen Modulationshubs gedämpft.

Die Strahlprofile der beiden Teilstrahlen **3a** und **3b'** werden bei einer Einkopplung in je einen Strahlungsleiter **30a** und **30b** durch dessen Einkopplungsoptik **32a** und **32b** und dessen optisches Auskopplungssystem **29a** und **29b**, welches den ausgekoppelten Strahl kollimiert abstrahlt, unterschiedlich geformt und zwar so, daß Teilstrahl **3a** einen breiten Strahldurchmesser und Teilstrahl **3b'** einen schmalen Strahldurchmesser erhält. Die Strahlformung kann nun durch die Strahlungsleiter (Monomodefaser; Multimodefaser; Verwendung mit Fasern mit unterschiedlichem Dotierungsprofil) oder das an das Faserende anschließende refraktive oder diffraktive optische Systeme **29a** und **29b** zur Auskopplung, oder durch beides, erfolgen. Die mit den optischen Systemen **29a** und **29b** aus den Strahlungsleitern **30a** und **30b** ausgekoppelten Teilstrahlen **3a''** und **3b''** sind kollimiert. Die optischen Systeme **29a** und **29b** sind vorzugsweise derart ausgebildet, daß der Strahldurchmesser des Teilstrahls **3a''** bedeutend kleiner ist als derjenige des Teilstrahls **3b''**. Der Teilstrahl **3b''** wird mit einem Umlenkspiegel **31** um 90° auf einen Überlagerungsspiegel **33** geführt.

Der Umlenkspiegel **31** und der Überlagerungsspiegel **33** bilden die Zusammenführeinrichtung **13** für die beiden Teilstrahlen **3a''** und **3b''**. Das Zusammenführen erfolgt hier geometrisch optisch (im Gegensatz zu einer "physikalischen" Vereinigung, bei der polarisierende Strahlteiler bzw. teildurchlässige Spiegel verwendet werden, was ebenfalls im Rahmen des erfindungsgemäßen Verfahrens möglich wäre, jedoch einen Leistungsverlust an die 50% nach sich ziehen würde). Zu diesem Zweck hat der Spiegel **33** ein zentrisches Loch, durch das der Teilstrahl **3a''** ungehindert hindurchtreten kann. Der Teilstrahl **3b''** wird durch die das Loch umgebende Spiegelfläche um 90° reflektierend umgelenkt. Beide Teilstrahlen **3a''** und **3b''** sind nun zum Materialbearbeitungsstrahl **17** koaxial zusammengeführt, der mit der Fokussiereinrichtung **15** auf die Oberfläche **19** des Tiefdruckzylinders **1** fokussiert wird. Durch die Fokussierung wird der schmale Teilstrahl **3a''** gemäß der in Figur 2 gestrichelt dargestellten Intensitätsverteilungskuve **35** mit einem relativ großen Fokusdurchmesser $d_2$ und der Teilstrahl **3b''** gemäß der strichpunktierten Intensitätsverteilungskurve **37** mit einem kleinen Fokusdurchmesser $d_1$ auf der Oberfläche **19** abgebildet. Der Rand des Fokuspunktes ist durch einen Abfall der Intensität auf 1/e-ten Teil des Maximalwertes definiert. Der Teilstrahl **3a''** mit dem großen Fokusdurchmesser $d_2$ benötigt eine möglichst große Leistung. Bei der Zusammenführung der Teilstrahlen **3a''** und **3b''** sollte der Teilstrahl **3a''** mit der großen Leistung vollständig übertragen werden. Für den kleinen Fokuspunkt (nach der Fokussierung durch die Fokussiereinrichtung **15**) reicht bei der Herstellung der Rasternäpfchen bereits ein Bruchteil der im Teilstrahl **3b''** enthaltenen Leistung aus. Der für die Reflexion nicht zur Verfügung stehende Mittenbereich (Durchtrittsloch für den Strahl **3a''**) des Umlenkspiegels **33** kann deshalb vernachlässigt werden. Die gestrichelt und strichpunktiert dargestellten Intensitätsverteilungen sind nur rechnerisch ermittelt; experimentell lassen sie sich nur einzeln darstellen. Für die Materialbearbeitung, d. h. für die Erzeugung des betreffenden Rasternäpfchens ist die Intensitätsverteilung **39** in **Figur 2** der zusammengeführten Teilstrahlen **3a''** und **3b''** mit dem Fokusdurchmesser $d_3$ maßgebend.

Je nach Leistungsprofileinstellung der Teilstrahlen **3a** und **3b** lassen sich auf dem Tiefdruckzylinder 1 pro Laserpuls Näpfchen mit einem variablen Durchmesser von 10μm bis 180μm mit einer variablen Lochtiefe bis zu 50μm bei einem Aspektverhältnis (Lochtiefe zu Lochdurchmesser) von bis zu 2 herstellen. Insbesondere lassen sich bei geeigneter Ansteuerung der Modulatoren **7a** und **7b** auch rein durchmesservariable (d.h. in der Tiefe konstante) Tiefdrucknäpfchen herstellen. "Geeignet" bedeutet, daß die Leistung des Teilstrahls **3a** erniedrigt und gleichzeitig die des Teilstrahls **3b** derart erhöht wird, daß trotz abnehmendem Näpfchendurchmessers immer eine gleiche Näpfchentiefe erhalten wird. Die Steuerung der beiden Modulatore **7a** und **7b** hierzu wird experimentell ermittelt. Der erhaltene Näpfchendurchmesser wird ausgemessen. Die experimentellen Werte werden im Speicher **25** abgelegt.

Zur Herstellung der Rasternäpfchen auf dem Tiefdruckzylinder **1** werden die benötigten Rasterpunktdaten in den Speicher **25** der Steuereinrichtung eingespeichert. Die Steuereinrichtung **27** steuert nun je nach verwendetem Material des Tiefdruckzylinders **1** die Pumpleistung des Lasers **21** und dessen im Resonator befindlichen akusto-optischen Modulator. Die Ansteuerung dieses Modulators bestimmt die Repetitionsfrequenz der Pulse des Laserstrahls **23** und ergibt somit eine eindeutige Zuordnung für die Steuerung der beiden anderen akusto-optischen Modulatoren **7a** und **7b** sowie des Positionierens des Tiefdruckzylinders **1** mit der Positioniereinrichtung **9**. Die akustische Welle in jedem Modulator ist im Megahertzbereich. Ein Schalten der Modulatore **7a** und **7b** ist somit im Verhältnis zur Repetitionsfrequenz des Lasers (max. 70 kHz) äußerst schnell und damit ein Einstellen der entsprechenden Leistungsdaten jedes Teilstrahls zu jedem Laserpuls möglich. Die Leistung des Teilstrahls **3a** richtet sich nach der vom Laser **21** abgegebenen Leistung und dem in den Teilstrahl **3b** übergekoppelten Leistungsanteil. Dieser übergekoppelte Leistungsanteil kann dann durch den akusto-optischen Modulator **7b** von der Steuereinrichtung **27** gesteuert verringert werden.

Je nach den eingestellten Leistungsverhältnissen ergibt sich gegenüber der Darstellung in **Figur 2** eine andere Überlagerungskurve für das Intensitätsprofil im Fokuspunkt auf der Tiefdruckzylinderoberfläche. Soll das Profil der zu überlagernden Teilstrahlen verändert werden, so sind die beiden Teilstrahlen oder auch nur einer in der Strahlprofilformungseinrichtung **5a** bzw. **5b** abzuändern. Dies kann durch eine Variation des optischen Systems (Linsensystems **29a** und **29b**) erfolgen. Auch können andere Strahlungsleiter z. B. mit einem anderen Kerndurchmesser oder einem anderen Dotierungsprofil verwendet werden.

Auf die Strahlungsleiter **30a** und **30b** kann verzichtet werden, wodurch sich eine einfachere Strahlführung lediglich durch die Linsensysteme ergibt. Die Strahlungsleiter **30a** und **30b** wurden hier verwendet, um Erschütterungen von der Positioniereinrichtung **9** vom optischen System fernhalten zu können.

Anstelle den dünnen Teilstrahl **3a''** durch ein Spiegelloch im Umlenkspiegel für den "dicken" Teilstrahl hindurchtreten zu lassen, kann eine andere Strahlzusammenführung gewählt werden, bei der in der Mitte des nun gerade verlaufenden "dicken" Teilstrahls ein kleiner Umlenkspiegel für den nun senkrecht eintreffenden "dünnen" Teilstrahl verwendet wird.

Anstelle die beiden Teilstrahlen **3a** und **3b** aus einen einzigen Laserstrahl **23** zu erzeugen, können auch die Teilstrahlen von zwei getrennten Q-switch Lasern erzeugt werden, deren interne Q-switch Modulatoren dann durch die Steuereinrichtung **27** synchronisiert werden müßten.

In **Figur 2** ist eine koaxiale Zusammenführung von zwei Teilstrahlen beispielsweise dargestellt. Anstelle der beiden Teilstrahlen **3a** und **3b** können selbstverständlich auch mehrere Teilstrahlen zu einem einzigen Materialbearbeitungsstrahl mit vorgegebenem Intensitätsverlauf zusammengefügt werden. Es kann dann eine weitere Intensitätserhöhung im Strahlzentrum oder eine Strahlverbreiterung mit einer Intensitätsanhebung in den Strahlrandgebieten erreicht werden. Weitere Strahlen können durch die Verwendung weiterer optischer Schaltelemente, wie z.B. durch die oben beschriebenen akustooptische Modulatoren erzeugt werden.

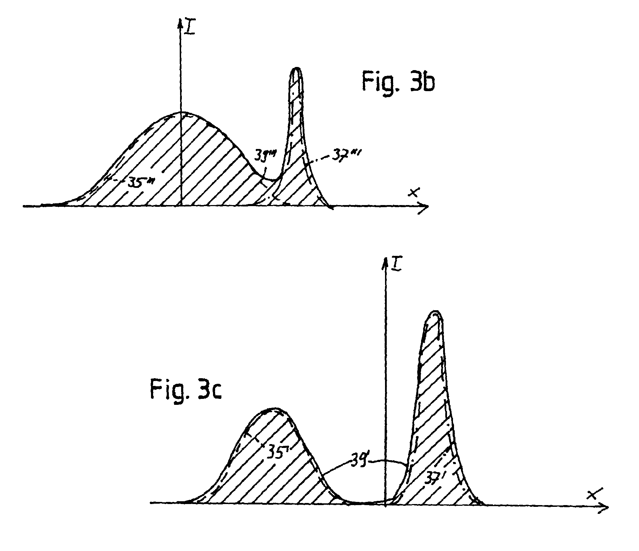

Anstelle einer koaxialen (zentrischen) Zusammenführung von Teilstrahlen kann auch eine nicht koaxiale sowie auch eine Zusammenführung von nicht parallel verlaufenden Teilstrahlen vorgenommen werden (**Figuren 3a** bis **3c**) ,wobei sich die fokussierten Teilstrahlen vollständig (**Figur 3a**) oder teilweise (**Figur 3b**) überlappen können bzw. vollständig voneinander getrennt (**Figur 3c**) sein können. Nicht zueinander parallele Teilstrahlen werden beispielsweise durch eine leichte Verkippung des Umlenkspiegels **31** erhalten. Anstelle eines mit beispielsweise einer Verstellschraube einstellbaren Umlenkspiegels kann auch ein sog. Galvanometerspiegel verwendet werden, der durch einen elektrischen Antrieb verstellbar ist. Eine derartige Anordnung wird man wählen, wenn Vertiefungen [Löcher oder Sacklöcher (z.B. Rasternäpfchen)] mit einem unrunden Querschnitt erzeugt werden sollen. Auch können bei völlig räumlich voneinander getrennten Teilstrahlen je nach Anzahl der Teilstrahlen mehrere Vertiefungen mit unterschiedlichem Aspektverhältnis erzeugt werden. Abhängig von der Justage der Teilstrahlen lassen sich dann z.B. Gravurraster mit kleinen Zwischenpunkten zwischen den großen Näpfchen zur Erhöhung der Druckdichte und zur Verbesserung des Farbfließverhaltens erzeugen.

Die optische Achse der oben angeführten Teilstrahlen steht Immer senkrecht auf der zu bearbeitenden Fläche **19**; sie kann jedoch auch von der Senkrechten aufweichend liegen, wobei dann die optischen Achsen einzelner Teilstrahlen unterschiedliche Winkel haben können.

Anstatt die Leistung der oben beschriebenen Teilstrahlen **3a** und **3b** zur Erzeugung eines vorgegebenen, zeitlich sich ändernden Intensitätprofiles mit den Leistungseinstelleinrichtungen **7a** und **7b** zu ändern, können diese auch (zusätzlich, falls gewünscht) eine unterschiedliche, schnelle zeitliche Leistungsprofilformung vornehmen. Es kann somit auf einen hohen Initialpuls ein niedriger Leistungsverlauf folgen. Hierzu würde man bei gepulster Laserstrahlung kurz vor dem Eintreffen des aufgeteilten Pulses im Strahlverlauf **3b** den akusto-optischen Modulator **7b** vollständig für den Strahl öffnen und ihn dann innerhalb des Pulses nach einer vorgegebenen Zeit teilweise schließen. Auch könnte der Pulsanfang reduziert werden. Im Zusammengeführten Zustand der Teilstrahlen erhält man auf diese Weise eine ortsabhängige zeitliche Variation des Intensitätsprofils.

Der Umlenkspiegel **31** kann auch als sog. adaptiver Spiegel ausgebildet sein. Mit dem Spiegel alleine kann dann das Strahlprofil des Teilstrahls **3b** schnell verändert werden.

Anstelle eines akusto-optischen Modulators (zur Strahlaufteilung bzw. Dämpfung) kann auch ein elektrooptischer Modulator (Pockelszelle) oder ein magneto-optischer Modulator (Faraday-Rotator) verwendet werden. Diese beiden letzten Schaltelemente arbeiten jedoch im Gegensatz zum akusto-optischen Schaltelement mit polarisierter Strahlung.

Zur Erzeugung eines Rasternäpfchens kann nun pro Näpfchen nur jeweils ein Laserpuls oder auch mehrere Laserpulse verwendet werden.

Anstatt das Werkstück zu verfahren, kann auch die Zusammenführeinrichtung **13** mit der Fokussiereinrichtung **15** verfahren werden, was aufgrund der Laserleistungszuführung über die Strahlungsleiter **30a** und **30b** problemlos möglich ist. Man kann jedoch auch nur den Tiefdruckzylinder drehen und axial die Zusammenführeinrichtung **13** mit der Fokussiereinrichtung **15** bewegen.

**Patentansprüche**

1. Verfahren zur Erzeugung einer vorgegebenen Intensitätsverteilung eines Arbeitslaserstrahls **(17)** auf einer Objektoberfläche **(19)** bzw. in einem Objekt, **dadurch gekennzeichnet**, daß wenigstens ein erster und ein zweiter Teilstrahl **(3a, 3a'', 3b, 3b', 3b'')** mit jeweils einer vorgegebenen ersten und zweiten Intensitätsverteilung **(35, 37)** gebildet und die Leistung jedes Teilstrahls **(3a, 3a'', 3b, 3b', 3b'')** mit Schaltzeiten bis hinab zu Submikrosekunden gesteuert verändert wird, und die Teilstrahlen **(3a'', 3b'')** zu einer dritten Intensitätsverteilung **(39)** überlagert als Arbeitsstrahl **(17)** auf die Objektoberfläche **(19)** bzw. in das Objekt hinein gerichtet werden, um eine unterschiedliche Wirkung infolge einer variierten dritten Intensitätsverteilung **(39)** des Arbeitsstrahls **(17)** zu erreichen.

2. Verfahren nach Anspruch 1, **dadurch gekennzeichnet**, daß die Strahlungen aller Teilstrahlen **(3a, 3a'', 3b, 3b', 3b'')** bevorzugt zeitlich übereinstimmend von der betreffenden Strahlungsquelle **(21)** ausgesandt werden und insbesondere sich wenigstens räumlich teilweise überlagernd zu einem einzigen Arbeitsstrahl **(17)**, bevorzugt durch geometrische Strahlüberlagerung, vereinigt werden, der vereinigte Strahl **(17)** auf die Objektoberfläche **(19)** bzw. In das Objekt hinein gerichtet, bevorzugt fokussiert gerichtet und vorzugsweise der Ort im oder auf dem Objekt laufend verändert wird.

3. Verfahren nach Anspruch 1 oder 2, **dadurch gekennzeichnet**, daß der zeitliche Leistungsverlauf der Strahlung wenigstens eines Teilstrahls zeitlich mit Schaltzeiten bis hinab zu Submikrosekunden gesteuert verändert wird und bevorzugt die Intensität jedes Teilstrahls **(3a, 3a", 3b, 3b', 3b")** durch entsprechende elektrische Ansteuerung einer optischen Schalteinrichtung, wie einem elektro-optischen, akusto-optischen oder magneto-optischen Element **(7a, 7b)**, verändert und bevorzugt durch wenigstens eines dieser Elemente eine Strahlaufspaltung in die wenigstens zwei Teilstrahlen vorgenommen wird.

4. Verfahren nach einem der Ansprüche 1 bis 3, **dadurch gekennzeichnet**, daß das Strahlprofil jedes Teilstrahles **(3a, 3a", 3b, 3b', 3b")** vor ihrer Zusammenführung zu einem vorgegebenen Profil geformt wird, um mit einer bevorzugten nachfolgenden Fokussierung die vorgegebene Intensitätsverteilung zu erhalten, die sich grundlegend von derjenigen jedes einzelnen bevorzugt fokussierten Strahls unterscheidet und mit Schaltzeiten bis hinab zu Submikrosekunden ohne mechanische Bewegung optischer Komponenten variiert werden kann.

5. Verfahren nach einem der Ansprüche 1 bis 4, **dadurch gekennzeichnet**, daß ein erster Strahl **(23)** eines gepulsten Lasers **(21)** mit einem ersten akusto-optischen Modulator **(7a)** in einen ersten und einen zweiten Teilstrahl **(3a, 3b)** mit durch den ersten Modulator **(7a)** einstellbarer Teilleistung aufgespalten wird, der erste Teilstrahl **(3a)** auf einen vorgegebenen Strahldurchmesser mit einer vorgegebenen Intensitätsverteilung über seinen Querschnitt geformt, der zweite Teilstrahl **(3b)** mit einem zweiten akusto-optischen Modulator **(7b)** leistungsmoduliert und auf einen ebenfalls vorgegebenen Strahldurchmesser mit einer vorgegebenen Intensitätsverteilung, der bzw. die sich von dem- bzw. derjenigen des ersten Teilstrahls **(3a")** unterscheiden kann, geformt wird, beide Teilstrahlen **(3a", 3b")** zu einem Materialbearbeitungsstrahl **(17)** zusammengeführt und auf die Materialoberfläche **(19)** fokussiert werden, der Ort der Strahlungsfokussierung nach jeweils einer vorgegebenen Anzahl Pulse des Lasers **(21)** verändert wird, wobei die Ortsveränderung und die Intensität des ersten und des zweiten Teilstrahls **(3a, 3a", 3b, 3b', 3b")** mit den beiden Modulatoren **(7a, 7b)** gesteuert derart verändert werden, daß auf der Materialoberfläche **(19)** eine Reihe von Näpfchen mit unterschiedlichen Aspektverhältnissen gebildet werden, damit eine derart bearbeitete Oberfläche **(19)**, sofern sie Teil einer Walze ist, als Tiefdruckzylinder **(1)** verwendbar ist.

6. Vorrichtung zur Erzeugung einer Intensitätsverteilung eines Arbeitsstrahls **(17)** auf bzw. in einem Objekt **1** mit dem Verfahren nach einem der Ansprüche 1 bis 5, **gekennzeichnet durch** wenigstens eine Strahlungsquelle **(21)** für wenigstens zwei Teilstrahlen **(3a, 3a", 3b, 3b', 3b")** mit einer Strahlprofilformungseinheit **(5a, 5b)** für wenigstens einen Teilstrahl **(3a, 3a", 3b, 3b', 3b")** und wenigstens eine mit bis zu Submikrosekunden schaltende Leistungseinstelleinrichtung **(7a, 7b)** für wenigstens einen Teilstrahl **(3a, 3a", 3b, 3b', 3b")**, eine Einheit **(13)** zum Zusammenführen der Teilstrahlen **(3a", 3b")** zum Arbeitsstrahl **(17)**, eine Positionier- **(9)** sowie bevorzugt eine Fokussiereinrichtung **(15)** zur Fokussierung des Arbeitsstrahls **(17)** auf bzw. in das Objekt **1.**

7. Vorrichtung nach Anspruch 6, **gekennzeichnet durch** einen gepulsten, bevorzugt periodisch gepulsten Q-switch Laser als Strahlungsquelle **(21)** zur Erzeugung eines Quellenstrahls **(23)**, einen Strahlteiler als Leistungseinstelleinrichtung **(7a)**, mit dem der Quellenstrahl **(23)** in die beiden Teilstrahlen **(3a, 3b)** bevorzugt gesteuert derart aufteilbar ist, dass jeder Teilstrahl **(3a, 3b)** pro Laserpuls eine vorgegebene Leistung hat, und der Strahlteiler **(7a)** vorzugsweise als akusto-optischer Modulator ausgebildet ist, und eine weitere Leistungseinstelleinrichtung **(7b)**, insbesondere einen weiteren akusto-optischen Modulator, zur Leistungseinstellung der Strahlung eines der beiden Teilstrahlen **(3b)**.

8. Vorrichtung nach Anspruch 8 oder 7, **gekennzeichnet durch** eine Steuereinrichtung **(17)** mit einem Speicher **(25)**, in dem Rasterinformationen für die Bildpunkte eines Tiefdruckrasters abspeicherbar sind, einen Tiefdruckzylinder **(1)**, dessen Oberfläche **(19)** die zu bearbeitende Werkstückoberfläche ist, eine elektrische Verbindung der Steuereinrichtung **(17)** mit jeder Leistungseinstelleinrichtung **(7a, 7b)** zur Leistungssteuerung der Teilstrahlen **(3a, 3b)** für jeden Strahlungspuls, um pro zu erzeugendem Rasterpunkt auf dem Tiefdruckzylinder ein vorgebbares strahlquerschnittsmäßiges und/oder bevorzugt zeitliches Intensitätsprofil des Arbeitsstrahls **(17)** auf der Werkstückoberfläche **(19)** als Objektoberfläche für eine Materialabtragung mit einem vorgebbaren Aspektverhältnis zu erhalten.

Fig. 1

Fig. 2

Fig. 3a

Fig. 3b

Fig. 3c

**Europäisches Patentamt**

## EUROPÄISCHER RECHERCHENBERICHT

Nummer der Anmeldung

EP 99 81 0623

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 856 648 A (FRAUCHINGER ET AL.) 5. Januar 1999 (1999-01-05) | 1-3,6 | B23K26/06 |
| Y | * Spalte 4, Zeile 13 - Spalte 4, Zeile 55; Abbildung 2 * | 4 | |
| Y | US 4 958 900 A (ORTIZ JR ANGEL L) 25. September 1990 (1990-09-25) * Spalte 3, Absatz 3; Abbildungen 4-7 * * Spalte 4, Absatz 5 * | 4 | |
| X | US 5 386 221 A (BOHAN MICHAEL ET AL) 31. Januar 1995 (1995-01-31) * Spalte 7, Zeile 18 - Spalte 8, Zeile 31; Abbildung 5 * | 6 | |
| A | DE 42 12 390 A (BAASEL CARL LASERTECH) 14. Oktober 1993 (1993-10-14) * Abbildungen * | 1,2 | |
| A | US 5 279 775 A (THOMAS FRED C ET AL) 18. Januar 1994 (1994-01-18) | | |

RECHERCHIERTE SACHGEBIETE (Int.Cl.7)

B23K

Der vorliegende Recherchenbericht wurde für alle Patentansprüche erstellt

| Recherchenort | Abschlußdatum der Recherche | Prüfer |
|---|---|---|
| MÜNCHEN | 9. Dezember 1999 | Caubet, J-S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 81 0623

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-12-1999

| Im Recherchenbericht angeführtes Patentdokument | | Datum der Veröffentlichung | Mitglied(er) der Patentfamilie | | Datum der Veröffentlichung |
|---|---|---|---|---|---|
| US 5856648 | A | 05-01-1999 | WO | 9634718 A | 07-11-1996 |
| | | | EP | 0768932 A | 23-04-1997 |
| | | | JP | 9510414 T | 21-10-1997 |
| US 4958900 | A | 25-09-1990 | CA | 2009602 A,C | 27-09-1990 |
| | | | DE | 4009089 A | 04-10-1990 |
| | | | FR | 2644900 A | 28-09-1990 |
| | | | GB | 2230353 A,B | 17-10-1990 |
| | | | IT | 1239492 B | 03-11-1993 |
| | | | JP | 2284783 A | 22-11-1990 |
| US 5386221 | A | 31-01-1995 | AU | 5410394 A | 24-05-1994 |
| | | | CA | 2148122 A | 11-05-1994 |
| | | | DE | 69326079 D | 23-09-1999 |
| | | | DE | 811882 T | 22-10-1998 |
| | | | EP | 0670784 A | 13-09-1995 |
| | | | EP | 0811882 A | 10-12-1997 |
| | | | JP | 8507410 T | 06-08-1996 |
| | | | WO | 9409989 A | 11-05-1994 |
| DE 4212390 | A | 14-10-1993 | KEINE | | |
| US 5279775 | A | 18-01-1994 | DE | 69316618 D | 26-02-1998 |
| | | | DE | 69316618 T | 17-09-1998 |
| | | | EP | 0644813 A | 29-03-1995 |
| | | | JP | 7507967 T | 07-09-1995 |
| | | | WO | 9325341 A | 23-12-1993 |

EPO FORM P0461

Für nähere Einzelheiten zu diesem Anhang : siehe Amtsblatt des Europäischen Patentamts, Nr.12/82